# EUROPÄISCHE PATENTSCHRIFT

(11) **EP 1 108 975 B1**
(45) Veröffentlichungstag und Bekanntmachung des Hinweises auf die Patenterteilung: **24.09.2003**
(21) Anmeldenummer: 00101317.6
(22) Anmeldetag: 22.01.2000
(51) Int. Cl.: G01B 5/004, G01B 5/008

(54) **Messeinrichtung für Baugruppen, insbesondere Karosseriebaugruppen**
Measuring device for assemblies, in particular for assemblies of a car body
Dispositif de mesure pour des assemblages, particulièrement pour des equipments de carrosserie

(30) Priorität: 18.12.1999 DE 19961326
(43) Veröffentlichungstag der Anmeldung: 20.06.2001
(73) Patentinhaber: Dr.Ing. h.c.F. Porsche Aktiengesellschaft, 70435 Stuttgart (DE)
(72) Erfinder: Dreissig, Bernd, 75223 Oeschelbronn (DE)

(56) Entgegenhaltungen:
- EP-A- 0 176 204
- EP-A- 0 522 610
- EP-A- 0 987 514
- DE-A- 19 648 848
- US-A- 4 664 232
- US-A- 5 293 107
- US-A- 5 724 264

## Beschreibung

Die Erfindung betrifft eine Meßeinrichtung nach dem Oberbegriff des Anspruchs 1.

Aus der DE 41 40 294 A1 ist eine Meßeinrichtung zur Bestimmung einer Flächenkontur durch mechanisches Abtasten einzelner Punkte einer Fläche mit einem Meßarm, der wenigstens drei gegeneinander bewegliche Gelenkarme aufweist, bekannt. Desweiteren sind Drei-D-Koordinaten-Meßeinrichtungen bekannt, die auf Meßschienen geführt und welche beispielsweise mit stationären Meßplatten fest verbunden sind, wodurch eine Verwendung dieser Meßeinrichtung unmittelbar an die Meßplatte gebunden ist. Ein die Meßeinrichtung umfassender Meßarm wird manuell bewegt und gehalten. Ferner ist aus der DE 196 48 848 A1 ein Höhenmeß- und Anreißgerät zum dreidimensionalen Messen und/oder Anreißen von Werkstücken, bestehend aus einem Gerätefuß, wenigstens einem beweglichen, ein Meß- oder Anreißwerkzeug tragenden und mit dem Gerätefuß direkt oder indirekt verbundenen Arm bekannt, wobei der Arm über eine Kompensationsvorrichtung in jeder beliebigen Position haltbar ist, und wobei die Kompensationsvorrichtung mit einem hydraulischen System versehen ist, welches in jeder beliebigen Position blockierbar ist.

Aufgabe der Erfindung ist es, eine einfache Meßeinrichtung zu schaffen, die flexibel zum Aufbauen und Kontrollieren von Baugruppen, insbesondere von Karosseriebaugruppen einsetzbar ist und darüber hinaus eine Festlegung der Gelenkarme in jeder Position genauestens in einfcher Weise erfolgen kann.

Diese Aufgabe wird erfindungsgemäß durch die Merkmale des Anspruchs 1 gelöst. Weitere vorteilhafte Merkmale beinhalten die abhängigen Ansprüche.

Es ist bereits eine Meßeinrichtung in EP-A-0 987 514 (ein Dokument gemäß Artikel 54(3) EPÜ) beschrieben, wobei eine Festlegung der Gelenkarme in jeder Position erfolgen kann. Dies wird durch Arretiereinrichtungen erzielt, die zwischen den Gelenkarmen vorgesehen sind.

Die mit der Erfindung hauptsächlich erzielten Vorteile bestehen unter anderem darin, daß, wie auch in EP-A-0 987 514 beschrieben, die Meßeinrichtung unabhängig von einer stationären Meßplatte vielseitig einsetzbar ist, so daß eine Verwendung, beispielsweise im Fahrzeug, in Baugruppen, in der Produktion und auch allgemein in der Werkstatt möglich wird. Die Baugruppen können mittels der Meßeinrichtung entsprechend repariert, geändert, erweitert und aufgebaut werden.

Um die Möglichkeit einer Arretierung der einzelnen Gelenkarme gegeneinander und auch des einen Gabelarmes gegenüber dem Ständer zu gewährleisten, sind Klemm-Bremseinrichtungen sowie eine Backen-Bremseinrichtung und eine Scheiben-Bremseinrichtung vorgesehen. Diese Einrichtungen werden insbesondere pneumatisch betrieben, so daß die Nachteile von hydraulikbetriebenen Bremseinrichtungen vermieden werden.

Die Scheiben-Bremseinrichtung ist zwischen dem Ständer und dem ersten Gelenkarm vorgesehen und besteht aus einem Scheibensegment mit am Gelenkarm hochgezogenen und mit diesem fest verbundenen gegenüberliegenden Abschnitten. Ein mit dem Ständer verbundener Bremssattel weist Bremsbacken auf, die über Bremskolben betätigt werden. Über diese Scheiben-Bremseinrichtung erfolgt eine Freigabe- oder Festsetzstellung des ersten Gelenkarmes um eine Schwenkachse.

Desweiteren ist zwischen dem Ständer und dem ersten Gelenkarm zur Festlegung oder Freigabe einer Drehbewegung eine erste Klemm-Bremseinrichtung vorgesehen. Diese Bremseinrichtung weist eine Stirnflansche des ersten Gelenkarmes und des Trägers übergreifende Hülse auf, welche in einem Freiraum Stellringe besitzt, die durch Beaufschlagung eine axiale Kraft erzeugen, wodurch die Stirnflansche aufeinanderliegend gehalten werden.

Damit ein Festsetzen und Freigeben des zweiten Gelenkarmes zum ersten Gelenkarm um eine Drehachse sowie um eine Schwenkachse in einfacher Weise erfolgen kann, ist für die Drehachse eine zweite Klemm-Bremseinrichtung und für die Schwenkachse des zweiten Gelenkarmes eine Backen-Bremseinrichtung vorgesehen.

Die Klemm-Bremseinrichtung ist zwischen einem den Gelenkarm umgebenden inneren Hülsenelement und einer koaxial hierzu angeordneten äusseren Hülse in einem Ringraum angeordnet, welcher Schrägflächen besitzt, gegen die Stellsegmente mit korrespondierenden Schrägflachen pneumatisch anpreßbar sind. Das Hülsenelement ist mit einem oberen Endbereich mit einem Ansatzteil des zweiten Gelenkarmes und die äussere Hülse ist mit einem unteren Endbereich am ersten Gelenkarm befestigt, so daß sich diese beiden Elemente frei gegeneinander verdrehen können. Durch Beaufschlagung der Stellsegmente über Stellringe wird eine Freigabestellung bzw. Bremsstellung des zweiten Gelenkarmes gegenüber dem ersten Gelenkarm um die Drehachse erzielt.

Die Backen-Bremseinrichtung ist in einem Hülsenteil angeordnet, das auf einen Ansatz des Hülsenelements aufsteckbar ist, wobei zwischen diesem Ansatz des Hülsenelements und dem Hülsenteil Bremsbeläge angeordnet werden, die pneumatisch beaufschlagbar sind und sich gegen Bremsflächen des Ansatzes anlegen.

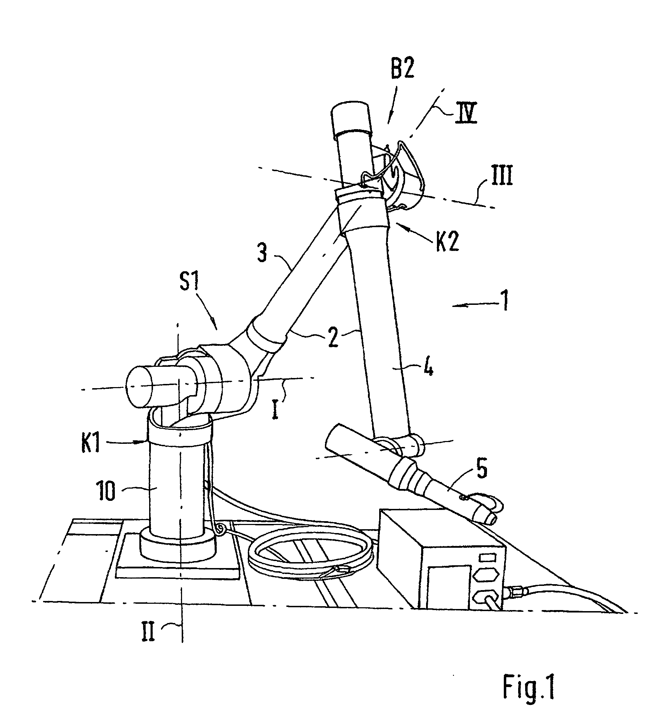

Ein Ausführungsbeispiel der Erfindung ist in den Zeichnungen dargestellt und wird im folgenden näher beschrieben.
Es zeigen
- Fig. 1: eine Seitenansicht auf einen Meßarm mit zwei Gelenkarmen und einem Ständer mit Fußplatte,

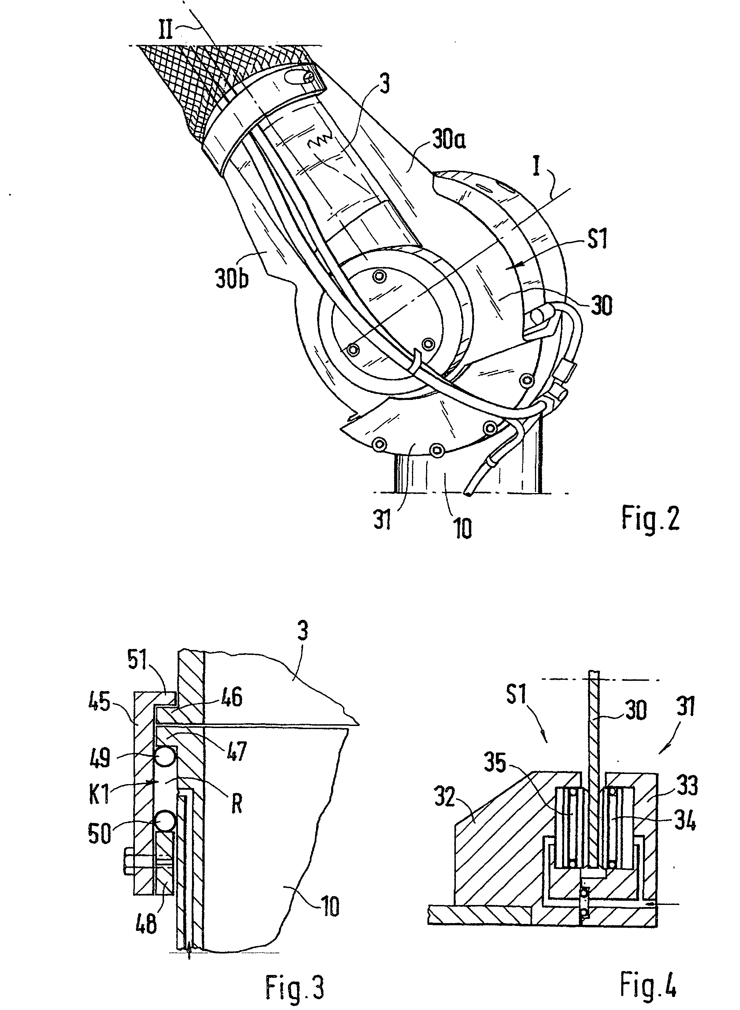

- Fig. 2: eine schaubildliche Darstellung auf eine Scheiben-Bremseinrichtung zwischen Ständer und erstem Gelenkarm,
- Fig. 3: einen Schnitt durch eine erste Klemm-Bremseinrichtung zwischen Ständer und erstem Gelenkarm,
- Fig. 4: einen Schnitt durch die Scheiben-Bremseinrichtung zwischen Ständer und erstem Gelenkarm, und

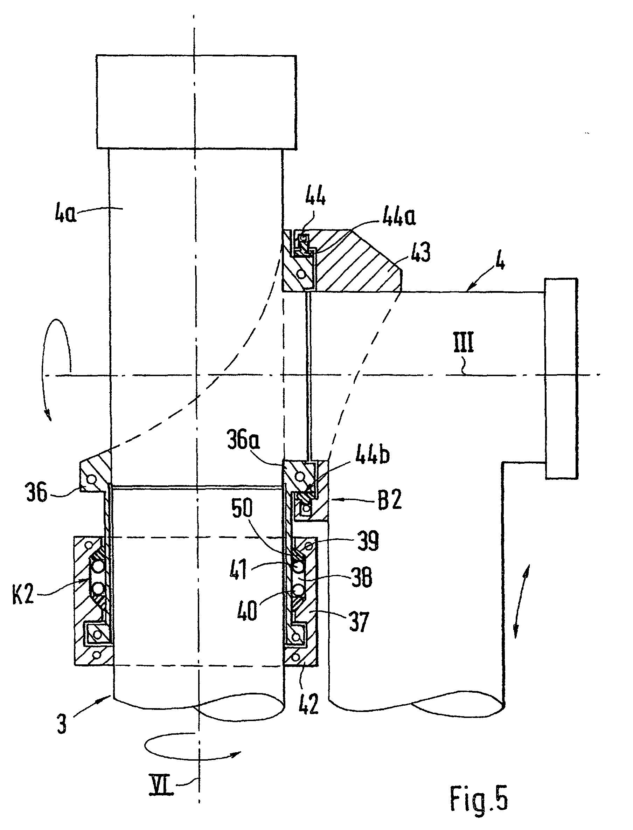

- Fig. 5: einen Schnitt durch eine zweite Klemm-Bremseinrichtung und eine Backen-Bremseinrichtung zwischen erstem und zweitem Gelenkarm.

Die Meßeinrichtung 1 umfaßt im wesentlichen einen Meßarm 2 mit zwei Gelenkarmen 3, 4 sowie einen Meßtaster 5. Die Gelenkarme 3, 4 sind über Lager miteinander verbunden, derart, daß sich Drehachsen II, IV und Schwenkachsen l, III für die Meßeinrichtung 1 ergeben.

Der Meßarm 2 der Einrichtung 1 weist zum festen Positionieren der einzelnen Arbeitsstellungen der beiden Gelenkarme 3, 4 Bremseinrichtungen K1, K2 und S1 und B2 auf. Diese Bremseinrichtungen werden vorzugsweise pneumatisch betätigt. Eine Scheiben-Bremseinrichtung S1 ist zwischen einem Ständer 10 und einem ersten Gelenkarm 3 angeordnet und besteht aus einem Scheibenelement 30, das über gegenüberliegende Abschnitte 30a, 30b am Gelenkarm 3 festgelegt wird. Zur Betätigung der Bremseinrichtung S1 dienen Bremskolben 34, 35, die in einem die Bremsscheibe 30 umgreifenden Bremssattel 31 angeordnet sind. Mit dieser Bremseinrichtung S1 kann eine Bewegung um die Schwenkachse l freigegeben bzw. gesperrt werden.

Desweiteren ist zwischen dem Ständer 10 und dem Gelenkarm 3 eine erste Klemm-Bremseinrichtung K1 angeordnet. Diese umfaßt ein gegenüberstehende Ringflansche 46, 47 des Ständers 10 und des ersten Gelenkarmes 3 übergreifendes Hülsenelement 45. Dies weist in einem von einem Stützring 48 abgeschlossenen Ringraum R pneumatisch betätigbare Stellringe 49, 50 auf. Bei einer Druckbeaufschlagung in den Ringraum R spreizen sich die Stellringe 49, 50 auseinander und über das Hülsenelement 45 werden die Ringflansche 46, 47 mittels eines Hülsenflansches-51 zusammengezogen. Durch diese Bremseinrichtung K1 wird eine Bewegung um die Drehachse II freigegeben bzw. gesperrt. Die weiteren Bremseinrichtungen K2 und B2 sind zwischen den Gelenkarmen 3 und 4 vorgesehen. Die zweite Klemm-Bremseinrichtung K2 umfaßt im wesentlichen ein inneres Hülsenelement 36, das fußseitig mit einem Ansatzteil 4a des Gelenkarmes 4 fest verbunden ist. Eine das Hülsenelement 36 umgebende äussere Hülse 37 ist nur mit dem Gelenkarm 3 verbunden und schließt einen Ringraum 38 für Stellelemente 40, 41 ein, die gegen Keilelemente 50 mit Schrägflächen 39 wirken, welche korrespondierend zu Schrägflächen 39 des Ringraumes wirken.

Durch pneumatische Druckbeaufschlagung werden über die Stellelemente 40, 41 die Keilelemente 50 nach aussen gedrückt, so daß durch ein Freigeben bzw. Sperren eine Bewegung um die Drehachse IV bewirkt wird.

Die Backen-Bremseinrichtung B2 ist zwischen dem Hülsenelement 36 und einem auf einen Ansatz 36a des Hülsenelements 36 aufgesteckten Hülsenteil 43 vorgesehen, das mit dem Gelenkarm 4 fest verbunden ist. In diesem Hülsenteil 43 sind Bremsbacken 44a angeordnet und in einer Ringnut 44 geführt Die Bremsbacken 44a sind druckbeaufschlagbar gegen Bremsflächen 44b am Hülsenelement 36 einstellbar. Durch diese Bremseinrichtung B2 wird eine Bewegung um die Schwenkachse III gesperrt bzw. freigegeben.

## Patentansprüche

1. Meßeinrichtung für Baugruppen, insbesondere Karosseriebaugruppen, die einen Ständer (10) und einen mehrteiligen Meßarm mit einem Meßtaster aufweist und mit einer Drei-D-Koordinaten speichernden Auswerteeinheit zusammenarbeitet, wobei die Meßeinrichtung aus einer unabhängig von einer stationären Meßplatte verwendbaren Baueinheit mit dem Meßarm besteht, dessen einzelne Gelenkarme verstellbar in Schwenk- und Drehlagen gehalten und über ansteuerbare Einrichtungen in eingestellten Positionen festsetzbar sind, **dadurch gekennzeichnet, daß** zwischen dem Ständer (10) und einem ersten Gelenkarm (3) eine mit dem ersten Gelenkarm fest verbundene Scheiben-Bremseinrichtung (S1) für eine Schwenkachse (I) und eine erste Klemm-Bremseinrichtung (K1) für eine Drehachse (II) des Ständers (10) verhanden ist und zwischen dem ersten Gelenkarm (3) und dem zweiten Gelenkarm (4) eine Backen-Bremseinrichtung (B2) für eine Schwenkachse (III) sowie eine zweite Klemm-Bremseinrichtung (K2) für eine Drehachse (IV) vorhanden ist.

2. Meßeinrichtung nach Anspruch 1, **dadurch gekennzeichnet, daß** zwischen dem Ständer (10) und dem ersten Gelenkarm (3) die erste Klemm-Bremseinrichtung (K1) angeordnet ist, welche eine die Flansche (46, 47) des Ständers (10) und des ersten Gelenkarmes (3) übergreifende Hülse (45) aufweist, und zwischen dem Stirnflansch (47) und einem Stützring (48) pneumatisch betätigbare Stellringe (49, 50) verhanden sind.

3. Meßeinrichtung nach Anspruch 1, **dadurch gekennzeichnet, daß** die Scheiben-Bremseinrichtung (S1) aus einem mit dem ersten Gelenkarm (3) verbundenen Scheibenelement besteht, das ein die Schwenkachse (I) umgebendes Scheibensegment (30) aufweist und mit am Gelenkarm (3) hochgezogenen und mit diesen fest verbundenen gegenüberstehenden Abschnitten versehen ist.

4. Meßeinrichtung nach den Ansprüchen 1 und 3, **dadurch gekennzeichnet, daß** mit dem Ständer (10) ein Bremssattel (31) für Bremsbacken (32, 33) vorhanden ist und in denen Bremskolben (34, 35) angeordnet sind, die pneumatisch angesteuert werden.

5. Meßeinrichtung nach den Ansprüchen 1, 2, 3 oder 4, **dadurch gekennzeichnet, daß** zwischen dem ersten Gelenkarm (3) und dem zweiten Gelenkarm (4) die zweite Klemm-Bremseinrichtung (K1) und die Backen-Bremseinrichtung (B2) angeordnet sind, wobei die Klemm-Bremseinrichtung (K2) eine Bewegung um die Drehachse (IV) und die Backen-Bremeinrichtung (B2) eine Bewegung um die Schwenkachse (III) begrenzt bzw. freigibt.

6. Meßeinrichtung nach den Ansprüchen 1 oder 5, **dadurch gekennzeichnet, daß** die Klemm-Bremseinrichtung (K2) zwischen einem den Gelenkarm (3) umgebenden inneren Hülsenelement (36) und einer koaxial hierzu angeordneten äusseren Hülse (37) in einem Ringraum (38) angeordnet ist, der begrenzende, stirnseitige Schrägflächen (39) aufweist, gegen Stellringe (50) mit korrespondierenden Schrägflächen über Stellelemente (40, 41) pneumatisch preßbar sind.

7. Meßeinrichtung nach den Ansprüchen 1 oder 6, **dadurch gekennzeichnet, daß** das Hülsenelement (36) mit einem oberen Endbereich (36a) mit einem Ansatzteil (4a) des zweiten Gelenkarmes (4) und die Hülse (37) mit einem unteren Endbereich (42) am Gelenkarm (3) fest verbunden ist und zwischen dem Hülsenelement (36) und der Hülse (37) über Stellelemente (40, 41) eine Arretierungs- bzw. Freigabemöglichkeit besteht.

8. Meßeinrichtung nach den Ansprüchen 1, 6 oder 7, **dadurch gekennzeichnet, daß** mit einem Ende eines Hülsenelements (36) ein den Gelenkarm (4) umgebendes Hülsenteil (43) verbunden ist, das in einer Ringnut (44) die Backen-Bremseinrichtung (B2) aufnimmt, welche pneumatisch betätigbar ist und aus Bremsbelägen(44a) besteht, die gegen Bremsflächen (44b) des Hülsenelements (36) verstellbar sind.

## Claims

1. A measuring device for sub-assemblies, in particular bodywork sub-assemblies, which has a stand (10) and a multiple-part measuring arm with a measuring sensor and cooperates with an evaluation unit storing 3-D co-ordinates, wherein the measuring device comprises a structural unit - which can be used independently of a stationary measurement plate - with the measuring arm, the individual articulated arms of which are held in an adjustable manner in pivoting and rotational positions and can be fixed in set positions by way of actuable devices, **characterized in that** a disc-brake device (**S1**) - connected to a first articulated arm (3) in a fixed manner - for a pivot axis (**I**) and a first clamping brake device (**K1**) for a rotational axis (**II**) of the stand (10) is present between the stand (10) and the first articulated arm (3), and a shoe-type brake device (**B2**) for a pivot axis (III) and a second clamping brake device (**K2**) for a rotational axis (**IV**) is present between the first articulated arm (3) and the second articulated arm (4).

2. A measuring device according to Claim 1, **characterized in that** the first clamping brake device (K1), which comprises a sleeve (45) engaging over the flanges (46, 47) of the stand (10) and of the first articulated arm (3), is arranged between the stand (10) and the first articulated arm (3), and setting rings (49, 50) actuable pneumatically are present between the front flange (47) and a support ring (48).

3. A measuring device according to Claim 1, **characterized in that** the disc-brake device (S1) comprises a disc member which is connected to the first articulated arm (3) and which has a disc segment (30) surrounding the pivot axis (**I**) and is provided with opposed portions raised-up on the articulated arm (3) and connected to the latter in a fixed manner.

4. A measuring device according to Claims 1 and 3, **characterized in that** a brake calliper (31) for brake shoes (32, 33), in which pneumatically actuated brake pistons (34, 35) are arranged, is present with the stand (10).

5. A measuring device according to Claim 1, 2, 3 or 4, **characterized in that** the second clamping brake device (**K1**) [*sic*] and the shoe-type brake device (**B2**) are arranged between the first articulated arm (3) and the second articulated arm (4), wherein the clamping brake device (**K2**) limits or releases a movement about the rotational axis (**IV**) and the shoe-type brake device (**B2**) limits or releases a movement about the pivot axis (**III**).

6. A measuring device according to Claim 1 or 5, **characterized in that** the clamping brake device (**K2**) is arranged in an annular space (38) between an inner sleeve member (36) surrounding the articulated arm (3) and an outer sleeve (37) arranged coaxially thereto, the annular space (38) having limiting oblique faces (39) at the end, against [which] setting rings (50) with corresponding oblique faces can be pressed pneumatically by way of setting members (40, 41).

7. A measuring device according to Claim 1 or 6, **characterized in that** the sleeve member (36) is connected in a fixed manner by an upper end region (36a) to an attachment part (4a) of the second articulated arm (4) and the sleeve (37) is connected in a fixed manner to a lower end region (42) on the articulated arm (3), and the possibility of locking or release exists between the sleeve member (36) and the sleeve (37) by way of the setting members (40, 41).

8. A measuring device according to Claim 1, 6 or 7, **characterized in that** a sleeve part (43), which surrounds the articulated arm (4) and which receives - in an annular groove (44) - the shoe-type brake device (**B2**) which can be actuated pneumatically and comprises brake pads (44a) which can be displaced against brake areas (44b) of the sleeve member (36), is connected to one end of a sleeve member (36).

## Revendications

1. Dispositif de mesure pour assemblages, en particulier assemblages de carrosserie, qui comporte un montant (10) et un bras de mesure en plusieurs parties avec un palpeur de mesure, et qui coopère avec une unité d'exploitation mémorisant des coordonnées en trois dimensions, le dispositif de mesure étant constitué d'une unité de construction avec le bras de mesure, pouvant être utilisée indépendamment d'une plaque de mesure fixe, dont les différents bras articulés sont maintenus réglables dans des positions de pivotement et positions de rotation et peuvent être fixés, par des dispositifs commandables, dans des positions réglées, **caractérisé en ce qu'**entre le montant (10) et un premier bras articulé (3) est prévu un dispositif de frein à disque (S1) solidaire du premier bras articulé pour un axe de pivotement (I) et un premier dispositif de frein à serrage (K1) pour un axe de rotation du montant (10), et, entre le premier bras articulé (3) et le deuxième bras articulé (4), sont prévus un dispositif de frein à mâchoires (B2) pour un axe de pivotement (III) ainsi qu'un deuxième dispositif de frein à serrage (K2) pour un axe de rotation (IV).

2. Dispositif de mesure selon la revendication 1, **caractérisé en ce qu'**entre le montant (10) et le premier bras articulé (3) est disposé le premier dispositif de frein à serrage (K1) qui comporte une douille (45) passant sur les brides (46, 47) du montant (10) et du premier bras articulé (3), et entre la bride frontale (47) et une bague d'appui (48) sont prévues des bagues de réglage (49, 50) qui peuvent être actionnées de manière pneumatique.

3. Dispositif de mesure selon la revendication 1, **caractérisé en ce que** le dispositif de frein à disque (S1) est constitué d'un élément à disque relié au premier bras articulé (3), qui comporte un segment de disque (30) entourant l'axe de pivotement (I) et est pourvu de portions en vis-à-vis relevées sur le bras articulé (3) et solidaires de celui-ci.

4. Dispositif de mesure selon les revendications 1 et 3, **caractérisé en ce qu'**avec le montant (10) est prévu un étrier (31) pour des mâchoires de frein (32, 33), dans lesquelles sont disposés des pistons de frein (34, 35) qui sont commandés de manière pneumatique.

5. Dispositif de mesure selon les revendications 1, 2, 3 ou 4, **caractérisé en ce qu'**entre le premier bras articulé (3) et le deuxième bras articulé (4) sont disposés le deuxième dispositif de frein à serrage (K1) et le dispositif de frein à mâchoires (B2), le dispositif de frein à serrage (K2) limitant ou autorisant un mouvement autour de l'axe de rotation (IV) et le dispositif de frein à mâchoires (B2), un mouvement autour de l'axe de pivotement (III).

6. Dispositif de mesure selon les revendications 1 ou 5, **caractérisé en ce que** le dispositif de frein à serrage (K2) est disposé entre un élément de douille (36) intérieur entourant le bras articulé (3). et un manchon extérieur (37) disposé coaxialement à celui-ci, dans un espace annulaire (38) qui comporte des surfaces obliques (39) de limitation, contre lesquelles des bagues de réglage (50) avec surfaces obliques correspondantes peuvent être pressées de manière pneumatique par l'intermédiaire d'éléments de réglage (40, 41).

7. Dispositif de mesure selon les revendications 1 ou 6, **caractérisé en ce que** l'élément de douille (36) est relié fixement, par une zone d'extrémité supérieure (36a), à un appendice (4a) du deuxième bras articulé (4) et le machon (37) est relié fixement, par une zone d'extrémité inférieure (42), au bras articulé (3), et entre l'élément de douille (36) et la manchon (37), il existe une possibilité de blocage ou de libération par l'intermédiaire d'éléments de réglage (40, 41).

8. Dispositif de mesure selon les revendications 1, 6 ou 7, **caractérisé en ce qu'**à une extrémité d'un élément de douille (36) est reliée une partie de douille (43) entourant le bras articulé (4), laquelle reçoit dans une rainure annulaire (44) le dispositif de frein à mâchoires (B2) qui peut être actionné de manière pneumatique, et est constitué de garnitures de frein (44a) qui sont déplaçables par rapport à des surfaces de frein (44b) de l'élément de douille (36).
